# EUROPÄISCHE PATENTSCHRIFT

(11) **EP 2 437 574 B1**
(45) Veröffentlichungstag und Bekanntmachung des Hinweises auf die Patenterteilung: **29.08.2018**
(21) Anmeldenummer: 11181667.4
(22) Anmeldetag: 16.09.2011
(51) Int. Cl.: H05B 33/08, H05B 37/02

(54) **Bedienvorrichtung zur Ansteuerung einer mehrfarbigen Lichtquelle und Beleuchtungsvorrichtung**
Control device for controlling a multicolour light source and lighting device
Dispositif de commande pour commander une source de lumière à plusieurs couleurs et dispositif d'éclairage

(30) Priorität: 29.09.2010 DE 102010046893
(43) Veröffentlichungstag der Anmeldung: 04.04.2012
(73) Patentinhaber: OSRAM GmbH, 80807 München (DE)
(72) Erfinder: Koch, Marcel, 33184 Altenbeken (DE)
(74) Vertreter: Epping - Hermann - Fischer

(56) Entgegenhaltungen:
- WO-A1-2006/103600
- DE-A1-102004 002 018
- DE-A1-102009 003 332
- DE-U1-212007 000 076
- US-A1- 2009 153 438

## Beschreibung

Es wird eine Bedienvorrichtung zur Ansteuerung einer mehrfarbigen Lichtquelle angegeben. Darüber hinaus wird eine Beleuchtungsvorrichtung mit einer solchen Bedienvorrichtung angegeben.

Die Druckschrift US 2009/0153352 A1 beschreibt eine Bedienvorrichtung.

Die Druckschrift WO 2008/092082 A2 beschreibt eine Steuervorrichtung.

Die Druckschrift WO 2005/084339 A2 beschreibt eine Beleuchtungsvorrichtung.

Die Druckschrift DE 10 2009 003 332 A1 beschreibt eine Bedienvorrichtung.

Der Druckschrift DE 10 2004 002 018 A1 sind DC-versorgte Betriebsmittel-Module für Leuchtmittel zu entnehmen.

Aus der Druckschrift DE 21 2007 000 076 U1 ist eine tragbare Vorrichtung zum Erkennen von Benutzeraktivitäten bekannt.

In der Druckschrift US 2009/0153438 A1 ist ein berührsensitives Benutzerinterface offenbart.

Eine lichtemittierende Einheit findet sich in der Druckschrift WO 2006/103600 A1.

Eine zu lösende Aufgabe besteht darin, eine Bedienvorrichtung zur Ansteuerung einer mehrfarbigen Lichtquelle anzugeben, die besonders einfach bedient werden kann.

Eine weitere zu lösende Aufgabe besteht darin, eine Beleuchtungsvorrichtung mit einer solchen Bedienvorrichtung anzugeben.

Erfindungsgemäß ist die Bedienvorrichtung zur Ansteuerung einer mehrfarbigen Lichtquelle eingerichtet. Bei der mehrfarbigen Lichtquelle handelt es sich um eine Lichtquelle, die Licht mit zumindest zwei unterschiedlichen Farben abstrahlen kann. Unter unterschiedlichen Farben werden im Folgenden Punkte in einem Farbraum, beispielsweise dem CIE XYZ Farbraum, verstanden, die von einem menschlichen Betrachter voneinander unterschieden werden können. Damit wird unter dem Begriff "farbiges" Licht auch weißes Licht verstanden. Bei Licht unterschiedlicher Farben kann es sich daher im Folgenden auch um weißes Licht unterschiedlicher Farbtemperaturen oder unterschiedlicher korrelierter Farbtemperaturen handeln. Weiter ist die mehrfarbige Lichtquelle dazu eingerichtet, Licht mit unterschiedlichen Helligkeiten zu erzeugen. Unter zwei verschiedenen Helligkeiten werden im Folgenden zwei unterschiedliche vom menschlichen Betrachter unterscheidbare Intensitäten des abgestrahlten Lichts verstanden.

Erfindungsgemäß umfasst die Bedienvorrichtung ein berührungssensitives Bedienelement, das dazu eingerichtet ist, mittels Berührung durch einen Benutzer bedient zu werden. Das berührungssensitive Bedienelement umfasst dazu eine Bedienoberfläche, die als Tastschirm (englisch: Touchscreen) ausgebildet ist. Beispielsweise kann die Bedienung des berührungssensitiven Bedienelements dann durch Bewegungen einer menschlichen Hand unter Kontakt mit dieser Bedienoberfläche erfolgen. Bei der Bedienoberfläche kann es sich dann beispielsweise um einen resistiven, kapazitiven oder induktiven Tastschirm handeln.

Erfindungsgemäß umfasst die Bedienvorrichtung einen Näherungsschalter, der dazu eingerichtet ist, das berührungssensitive Bedienelement bei der Annäherung des Benutzers an das berührungssensitive Bedienelement einzuschalten. Der Näherungsschalter reagiert beispielsweise auf die Annäherung einer Hand zum berührungssensitiven Bedienelement hin. Erreicht die Hand einen vorgegebenen Mindestabstand vom Bedienelement, so schaltet der Näherungsschalter das berührungssensitive Bedienelement ein, ohne dass vorher ein direkter Kontakt zum berührungssensitiven Bedienelement erfolgt. Bei dem Näherungsschalter kann es sich beispielsweise um einen induktiv, kapazitiv oder optisch arbeitenden Näherungsschalter handeln. Durch den Näherungsschalter wird das berührungssensitive Bedienelement eingeschaltet, so dass es nach dem Einschalten Berührungen durch einen Benutzer erfassen und entsprechend auswerten kann. Vorteilhaft ergibt sich dabei, dass das berührungssensitive Bedienelement so lange ausgeschaltet bleiben kann, bis es durch den Näherungsschalter für den Betrieb aktiviert wird. Es ist daher nicht notwendig, dass das berührungssensitive Bedienelement fortwährend bestromt wird. Aufgrund des Näherungsschalters kann die Bedienvorrichtung daher besonders stromsparend ausgebildet werden.

Erfindungsgemäß umfasst die Bedienvorrichtung eine Steuervorrichtung, die dazu eingerichtet ist, die mehrfarbige Lichtquelle zu steuern. Die Steuervorrichtung ist beispielsweise dazu eingerichtet, die vom berührungssensitiven Bedienelement gesendeten Informationen zu verarbeiten und die mehrfarbige Lichtquelle entsprechend dieser Informationen anzusteuern. Insgesamt kann auf diese Weise mittels Berührung durch einen Benutzer des berührungssensitiven Bedienelements die mehrfarbige Lichtquelle unter Verwendung der Steuervorrichtung gesteuert werden. Die Steuervorrichtung umfasst dazu wenigstens einen Mikrocontroller sowie zumindest eine Speichereinheit, in der Informationen zum Ansteuern der mehrfarbigen Lichtquelle abgelegt sind.

Erfindungsgemäß ist die Steuervorrichtung dazu eingerichtet, die mehrfarbige Lichtquelle mit einer vorgegebenen Anzahl von Farben und Helligkeiten zu steuern. Das heißt, in der Speichereinheit der Steuervorrichtung ist eine vorgegebene Anzahl von Farben und Helligkeiten abgespeichert. Mittels des berührungssensitiven Bedienelements kann ein Benutzer eine Farbe sowie eine Helligkeit aus der vorgegebenen Anzahl von Farben und Helligkeiten auswählen. Die Steuervorrichtung steuert dann die mehrfarbige Lichtquelle derart an, dass sie Licht mit der ausgewählten Farbe bei der ausgewählten Helligkeit emittiert. Das heißt, das berührungssensitive Bedienelement ist dazu eingerichtet, in Abhängigkeit von der Berührung durch den Benutzer eine Farbe und eine Helligkeit aus der vorgegebenen Anzahl der Farben und Helligkeiten auszuwählen. Es stehen nur Farben einen vorgegebenen Farbtons zur Auswahl durch den Benutzer zur Verfügung.

Erfindungsgemäß umfasst die Bedienvorrichtung zur Ansteuerung einer mehrfarbigen Lichtquelle ein berührungssensitives Bedienelement, das dazu eingerichtet ist, mittels Berührung durch einen Benutzer bedient zu werden, einen Näherungsschalter, der dazu eingerichtet ist, das berührungssensitive Bedienelement bei der Annäherung des Benutzers an das berührungssensitive Bedienelement einzuschalten und eine Steuervorrichtung, die dazu eingerichtet ist, eine mehrfarbige Lichtquelle zu steuern. Dabei ist die Steuervorrichtung dazu eingerichtet, die mehrfarbige Lichtquelle mit einer vorgegebenen Anzahl von Farben und Helligkeiten zu steuern und das berührungssensitive Bedienelement ist dazu eingerichtet, in Abhängigkeit von der Berührung durch den Benutzer eine Farbe und eine Helligkeit aus der vorgegebenen Anzahl der Farben und Helligkeiten auszuwählen.

Die mehrfarbige Lichtquelle kann von der Bedienvorrichtung dann mit der ausgewählten Farbe bei der ausgewählten Helligkeit betrieben werden.

Einer hier beschriebenen Bedienvorrichtung liegt dabei unter anderem die Idee zugrunde, einem Benutzer die Auswahl einer Farbe sowie einer Helligkeit aus einer beschränkten, vorgegebenen Anzahl von Farben und Helligkeiten zu ermöglichen.

Erfindungsgemäß ist die Steuervorrichtung dazu eingerichtet, die mehrfarbige Lichtquelle mit einer vorgegebenen Anzahl von wenigstens drei und höchstens 500 vorgegebenen Farben zu steuern. Das heißt, der Benutzer kann nicht aus einer unübersichtlich großen Anzahl von Farben auswählen, mit der die mehrfarbige Lichtquelle betrieben werden kann, sondern die Anzahl der Farben ist auf maximal 500 Farben beschränkt. Es hat sich dabei gezeigt, dass 500 Farben für die meisten Anwendungen in der Allgemeinbeleuchtung ausreichend sind.

Ferner hat sich gezeigt, dass ein Benutzer durch die Vorgabe von maximal 500 Farben nicht überfordert wird. Bei der Vorgabe von mehr, beispielsweise von 1000, 10000 oder noch mehr Farben ist es zu beobachten, dass der Benutzer sich für eine Farbe nur schlecht entscheiden kann und mit der ausgewählten Farbe oft unzufrieden ist. Insbesondere im Einsatz zur Allgemeinbeleuchtung stellt die Einschränkung auf eine vorgegebene Anzahl von Farben daher eine wünschenswerte Vereinfachung dar.

Erfindungsgemäß ist die Steuervorrichtung dazu eingerichtet, die mehrfarbige Lichtquelle mit einer vorgegebenen Anzahl von wenigstens vier und höchstens 100 Helligkeiten zu steuern. Das heißt, der Benutzer kann für jede der vorgegebenen Farben zwischen höchstens 100 unterschiedlichen Helligkeiten wählen. Es hat sich gezeigt, dass auch diese Vorgabe an den Benutzer die Auswahl einer gewünschten Helligkeit der Beleuchtung erleichtert und zum Beispiel in der Allgemeinbeleuchtung einer stufenlosen oder quasi stufenlosen Regelung der Helligkeit vorzuziehen ist.

Erfindungsgemäß werden die vorgegebenen Farben und Helligkeiten beispielsweise vor Inbetriebnahme der Bedienvorrichtung mittels eines Computers oder bereits bei der Fertigung der Bedienvorrichtung in eine Speichereinheit der Steuervorrichtung geladen. Ferner ist es möglich, dass die Bedienvorrichtung mit einem Computer, beispielsweise in dem Gebäude, in dem sich die Bedienvorrichtung befindet, verbunden ist. Jede Bedienvorrichtung im Gebäude kann dann vom Computer mit unterschiedlichen Helligkeiten und Farben, die zur Auswahl bereitstehen, bespeichert werden.

Erfindungsgemäß unterscheiden sich die auswählbaren Farben und Helligkeiten zu unterschiedlichen Tageszeiten. Auf diese Weise bietet die Bedienvorrichtung tagsüber ein anderes Farbspektrum dem Benutzer zur Auswahl als nachts. Der Vorteil der Bedienvorrichtung liegt dann insbesondere in ihrer Einfachheit. Nach einmaliger Konfiguration - die gegebenenfalls schon beim Hersteller der Bedienvorrichtung erfolgen kann - ist das System intuitiv zu bedienen.

Gemäß zumindest einer Ausführungsform der Bedienvorrichtung umfasst die Bedienvorrichtung ein berührungssensitives Bedienelement mit einer Bedienoberfläche, die dazu eingerichtet ist, im Betrieb Licht abzustrahlen, das eine zur ausgewählten Farbe ähnliche oder identische Farbe aufweist. Das heißt, die Bedienoberfläche, welche mittels Berührung durch den Benutzer vom Benutzer bedient wird, strahlt selbst Licht ab. Das abgestrahlte Licht weist dann eine Farbe auf, die vom menschlichen Benutzer nicht oder kaum von der Farbe zu unterscheiden ist, die von der mehrfarbigen Lichtquelle abgestrahlt wird. Dies erweist sich beispielsweise als vorteilhaft, wenn mit der Bedienvorrichtung eine mehrfarbige Lichtquelle bedient wird, die nicht im Sichtfeld des Benutzers angeordnet ist. Beispielsweise kann auf diese Weise eine Außenbeleuchtung eines Gebäudes von innen mit der gewünschten Farbe betrieben werden, ohne dass der Benutzer einen freien Blick auf die betriebene mehrfarbige Lichtquelle haben muss.

Gemäß zumindest einer Ausführungsform der Bedienvorrichtung umfasst das berührungssensitive Bedienelement eine Bedienoberfläche, die dazu eingerichtet ist, im Betrieb Licht abzustrahlen, das eine zur ausgewählten Helligkeit ähnliche oder proportionale Helligkeit aufweist. Das heißt, je größer die Helligkeit für das von der mehrfarbigen Lichtquelle abgestrahlte Licht gewählt wird, desto heller strahlt auch die Bedienoberfläche das Licht mit der ausgewählten Farbe ab.

Gemäß zumindest einer Ausführungsform der Bedienvorrichtung umfasst die Bedienvorrichtung einen Akustikschalter, der dazu eingerichtet ist, das berührungssensitive Bedienelement bei Empfang eines akustischen Signals vorgegebener Lautstärke einzuschalten. Das heißt, empfängt das Bedienelement ein akustisches Signal, das eine bestimmte vorgegebene Lautstärke übersteigt, so wird das berührungssensitive Bedienelement eingeschaltet. Beispielsweise kann das berührungssensitive Bedienelement nach dem Einschalten von seiner Bedienoberfläche her Licht abstrahlen, so dass die Bedienvorrichtung auch in Dunkelheit gut aufzufinden ist.

Bei dem akustischen Signal kann es sich beispielsweise um das Geräusch eines Klatschens oder um das Geräusch eines Aufschließens einer Tür handeln. Empfängt der Akustikschalter dann eines dieser akustischen Signale, so wird das berührungssensitive Bedienelement aktiviert und von der Bedienoberfläche her wird Licht abgestrahlt, so dass die Bedienvorrichtung beispielsweise unmittelbar nach dem Betreten eines Raums einfach aufzufinden ist. Ferner kann es möglich sein, dass durch die Betätigung des Akustikschalters mittels des akustischen Signals die Bedienvorrichtung die mehrfarbige Lichtquelle einschaltet. Die Bedienvorrichtung kann dann die mehrfarbige Lichtquelle im Sinne eines "Panic-Lights" betrieben werden.

Gemäß zumindest einer Ausführungsform der Bedienvorrichtung umfasst die Bedienvorrichtung zumindest eine Leuchtdiode, die dazu eingerichtet ist, zumindest einen Teil des von der Bedienoberfläche im Betrieb abgestrahlten Lichts zu erzeugen. Bei der Leuchtdiode kann es sich dann beispielsweise um eine so genannte RGB-Leuchtdiode handeln, die zumindest einen grünes Licht, einen rotes Licht und einen blaues Licht emittierenden anorganischen Leuchtdiodenchip umfasst. Die zumindest eine Leuchtdiode hinterleuchtet dann beispielsweise den Tastschirm.

Gemäß zumindest einer Ausführungsform der Bedienvorrichtung umfasst das berührungssensitive Bedienelement eine berührungssensitive OLED (organische lichtemittierende Diode), wobei eine Abstrahlfläche der berührungssensitiven OLED die Bedienoberfläche bildet. Beispielsweise besteht das berührungssensitive Bedienelement aus einer berührungssensitiven OLED, die dazu eingerichtet ist, Licht unterschiedlicher Farben und unterschiedlicher Helligkeiten zu erzeugen.

Erfindungsgemäß ist die Bedienoberfläche unstrukturiert. Das heißt, die Bedienoberfläche ist als glatte Fläche ausgebildet, die keine Strukturierung und keine andersartigen Kennzeichnungen wie beispielsweise Beschriftungen oder Symbole aufweist. Die Bedienoberfläche ist durch die unstrukturierte leuchtende Bedienoberfläche gebildet, in welche der Näherungssensor für den Benutzer nicht sichtbar integriert sein kann. Die Bedienvorrichtung wird vom Benutzer dann durch einfaches Streichen entlang der Bedienoberfläche bedient. Beispielsweise kann das Einschalten der von der Bedienvorrichtung angesteuerten mehrfarbigen Lichtquelle durch einfaches Antippen der Bedienoberfläche des berührungssensitiven Bedienelements erfolgen. Eine Auswahl der gewünschten Farbe kann durch einen Fingerstreich nach links oder rechts erfolgen, die Auswahl der gewünschten Helligkeit durch einen Fingerstreich nach oben oder unten. Die Bedienvorrichtung kann auf diese Weise so intuitiv wie ein Lichtschalter bedient werden.

Unter einer unstrukturierten Bedienoberfläche kann dabei zusätzlich auch eine Bedienoberfläche verstanden werden, an der keine Struktur sichtbar ist. Das heißt, an der Bedienoberfläche werden also auch keine Symbole oder ähnliche Strukturen wie bei einem Bildschirm dargestellt, sondern die Bedienoberfläche leuchtet einheitlich und gleichmäßig in einer einzigen Farbe.

Gemäß zumindest einer Ausführungsform der Bedienvorrichtung umfasst die Bedienvorrichtung einen Trägerfrequenzadapter, der dazu eingerichtet ist, die Bedienvorrichtung mit einem Betriebsstrom zu versorgen und der zum Austausch von Steuersignalen zwischen der Bedienvorrichtung und der mehrfarbigen Lichtquelle eingerichtet ist. Mit anderen Worten kann die Bedienvorrichtung mittels eines so genannten "Powerline Interface" ansteuerbar sein. Die Bedienvorrichtung kann dann über eine Trägerfrequenzanlage mit der mehrfarbigen Lichtquelle und/oder einem Computer zur Konfiguration der Bedienvorrichtung verbunden sein. Dadurch ist es insbesondere möglich, dass die Bedienvorrichtung in einem bestehenden Gebäude ohne größere Umbaumaßnahmen betrieben werden kann. Die Steuersignale zur Ansteuerung der mehrfarbigen Lichtquelle werden mittels der Trägerfrequenzanlage über den Trägerfrequenzadapter von der Bedienvorrichtung mittels bestehender Stromleitungen zur mehrfarbigen Lichtquelle weitergeleitet. Ebenso kann die Konfiguration der Bedienvorrichtung über die Stromleitung erfolgen.

Es wird darüber hinaus eine Beleuchtungsvorrichtung angegeben. Erfindungsgemäß umfasst die Beleuchtungsvorrichtung zumindest eine mehrfarbige Lichtquelle, die dazu eingerichtet ist, Licht mit veränderbaren Farben und Helligkeiten abzustrahlen. Ferner umfasst die Beleuchtungsvorrichtung eine Bedienvorrichtung, wie sie in Zusammenhang mit zumindest einer der oben angegebenen Ausführungsformen beschrieben ist. Die Bedienvorrichtung ist dabei zur Ansteuerung der zumindest einen mehrfarbigen Lichtquelle mit der zumindest einen mehrfarbigen Lichtquelle elektrisch leitend verbunden. Beispielsweise ist die Beleuchtungsvorrichtung zur Allgemeinbeleuchtung in oder außerhalb eines Gebäudes vorgesehen.

Mit anderen Worten kommt zur Ansteuerung der zumindest einen mehrfarbigen Lichtquelle der Beleuchtungsvorrichtung eine hier beschriebene Bedienvorrichtung zum Einsatz.

Gemäß zumindest einer Ausführungsform der Beleuchtungsvorrichtung umfasst die Beleuchtungsvorrichtung zumindest eine mehrfarbige Lichtquelle, die zumindest zwei Leuchtdiodenchips umfasst. Beispielsweise umfasst die mehrfarbige Lichtquelle eine Vielzahl von so genannten RGB-Leuchtdioden.

Gemäß zumindest einer Ausführungsform der Beleuchtungsvorrichtung umfasst die zumindest eine mehrfarbige Lichtquelle eine OLED. Die OLED kann dabei zur Erzeugung von mehrfarbigem Licht geeignet sein. Darüber hinaus ist es möglich, dass die Beleuchtungsvorrichtung zumindest eine OLED und zumindest einen anorganischen Leuchtdiodenchip umfasst.

Insbesondere ist es möglich, dass die mehrfarbige Lichtquelle die gleichen Leuchtmittel umfasst, die auch zur Erzeugung des Lichts in der Bedienvorrichtung Verwendung finden, welches die Bedienvorrichtung durch die Bedienoberfläche verlässt. Auf diese Weise kann das von der mehrfarbigen Lichtquelle im Betrieb abgestrahlte Licht durch die Bedienvorrichtung besonders einfach nachgebildet werden, insbesondere hinsichtlich der Farbe des abgestrahlten Lichts.

Gemäß zumindest einer Ausführungsform der Beleuchtungsvorrichtung umfassen die Bedienvorrichtung und die zumindest eine mehrfarbige Lichtquelle jeweils einen Trägerfrequenzadapter, der dazu eingerichtet ist, die Bedienvorrichtung und die zumindest eine mehrfarbige Lichtquelle mit einem Betriebsstrom zu versorgen. Mit anderen Worten sind die Bedienvorrichtung und die mehrfarbige Lichtquelle an eine Trägerfrequenzanlage angeschlossen. Die Bedienvorrichtung und die mehrfarbige Lichtquelle beziehen den zum Betrieb notwendigen Strom beispielsweise über eine Stromleitung, über die auch die Steuersignale zum Betreiben der mehrfarbigen Lichtquelle verteilt werden. Mit anderen Worten ist die Bedienvorrichtung dann dazu eingerichtet, die zumindest eine mehrfarbige Lichtquelle mittels auf eine Stromleitung aufgeprägte Steuersignale zu steuern.

Im Folgenden werden die hier beschriebene Bedienvorrichtung sowie die hier beschriebene Beleuchtungsvorrichtung anhand von Ausführungsbeispielen und den dazugehörigen Figuren näher erläutert.
Die Figuren 1A, 1B, 2A, 2B, 2C und 2D zeigen schematische Ansichten von hier beschriebenen Bedienvorrichtungen.
Die Figur 3 zeigt eine schematische Ansicht einer hier beschriebenen Beleuchtungsvorrichtung.

Gleiche, gleichartige oder gleich wirkende Elemente sind in den Figuren mit denselben Bezugszeichen versehen. Die Figuren und die Größenverhältnisse der in den Figuren dargestellten Elemente untereinander sind nicht als maßstäblich zu betrachten. Vielmehr können einzelne Elemente zur besseren Darstellbarkeit und/oder zum besseren Verständnis übertrieben groß dargestellt sein.

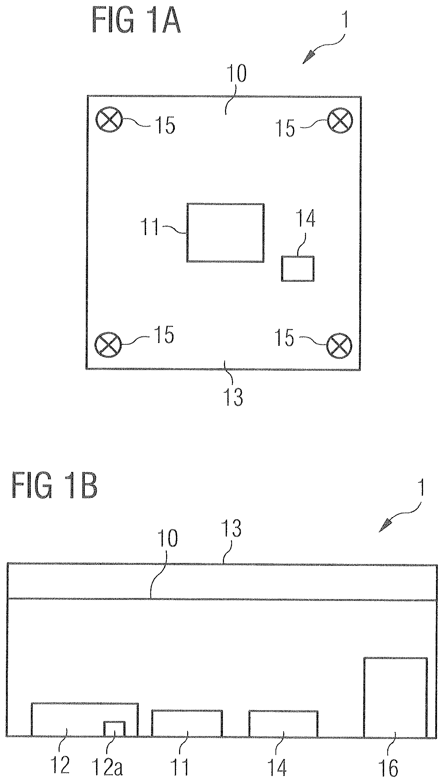

Die Figur 1A zeigt eine schematische Draufsicht auf eine hier beschriebene Bedienvorrichtung 1. Die Bedienvorrichtung 1 umfasst ein berührungssensitives Bedienelement 10. Von außerhalb der Bedienvorrichtung 1 blickt der Benutzer auf die Bedienoberfläche 13. Die Bedienoberfläche 13 ist unstrukturiert und optisch undurchsichtig ausgebildet. Das heißt, die in der Figur 1A gezeigten Elemente wie Leuchtdioden 15, Näherungsschalter 11 und Akustikschalter 14 sind vom Benutzer optisch nicht wahrnehmbar. Der Benutzer sieht lediglich die unstrukturierte Bedienoberfläche, die beispielsweise mit einer Glasscheibe gebildet sein kann.

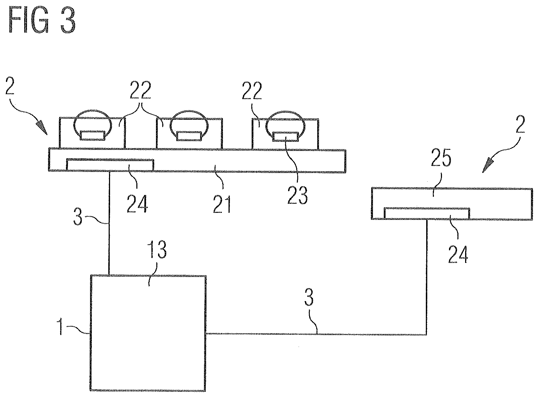

Die Bedienvorrichtung umfasst einen Näherungsschalter 11. Der Näherungsschalter 11 detektiert das Annähern eines Objekts, beispielsweise einer menschlichen Hand und schaltet das berührungssensitive Bedienelement 10 ein (siehe dazu beispielsweise auch die Schnittdarstellung der Figur 1B). Das berührungssensitive Bedienelement ist dazu eingerichtet, Berührungen der Bedienoberfläche 13 zu verarbeiten und an die Steuervorrichtung 12 weiterzuleiten. Die Steuervorrichtung 12 ist dann dazu eingerichtet, eine angeschlossene mehrfarbige Lichtquelle 2 (vergleiche dazu auch die Figur 3) anzusteuern.

Die Bedienvorrichtung umfasst ferner vorliegend einen Akustikschalter 14, der optional ist. Der Akustikschalter 14 ist zur Detektion eines akustischen Signals, das eine vorgegebene Lautstärke hat oder übersteigt, eingerichtet. Mittels des Akustikschalters 14 kann das berührungssensitive Bedienelement eingeschaltet werden. Darüber hinaus ist es möglich, dass mittels des Akustikschalters 14 auch die von der Bedienvorrichtung angesteuerte mehrfarbige Lichtquelle 2 eingeschaltet wird. Die Bedienvorrichtung hat dann zusätzlich die Funktion eines so genannten "Panic Lights".

Die Bedienvorrichtung umfasst ferner Leuchtdioden 15, vorliegend handelt es sich um anorganische Leuchtdioden. Die Leuchtdioden 16 dienen zur Erzeugung von Licht, welches die Bedienvorrichtung durch die Bedienoberfläche 13 verlässt. Beispielsweise kann die Bedienoberfläche 13 bei Annäherung eines Objekts, beispielsweise einer menschlichen Hand, kurz Aufleuchten (zum Beispiel Pulsieren) oder im Dauerbetrieb aufleuchten, um eine Aktivierung des berührungssensitiven Bedienelements anzuzeigen. Das berührungssensitive Bedienelement wird dann durch Berührung der Bedienoberfläche vom Benutzer bedient.

Alternativ zum in der Figur 1A gezeigten Ausführungsbeispiel kann auf die Leuchtdioden 15 auch verzichtet werden und das berührungssensitive Bedienelement ist durch eine berührungssensitive OLED gebildet.

Die Bedienvorrichtung 1 umfasst ferner einen Trägerfrequenzadapter 16, mittels dem die Bedienvorrichtung an eine Trägerfrequenzanlage angeschlossen werden kann. Signale zur Ansteuerung der mehrfarbigen Lichtquelle 2 verlassen die Bedienvorrichtung 1 dann über den Trägerfrequenzadapter 16. Ferner können Signale zur Konfiguration der Bedienvorrichtung 1 durch den Trägerfrequenzadapter 16 in die Steuervorrichtung 12 gelangen. Die Steuervorrichtung 12 umfasst eine Speichereinheit 12a, in der eine vorgegebene Anzahl von Farben und Helligkeiten abgespeichert ist, mit denen die angeschlossene oder angeschlossenen mehrfarbigen Lichtquellen angesteuert werden können. Die Speichereinheit 12a kann dabei beispielsweise über Signale, die in die Beleuchtungsvorrichtung 1 über den Trägerfrequenzadapter 16 eingeprägt werden, betrieben werden.

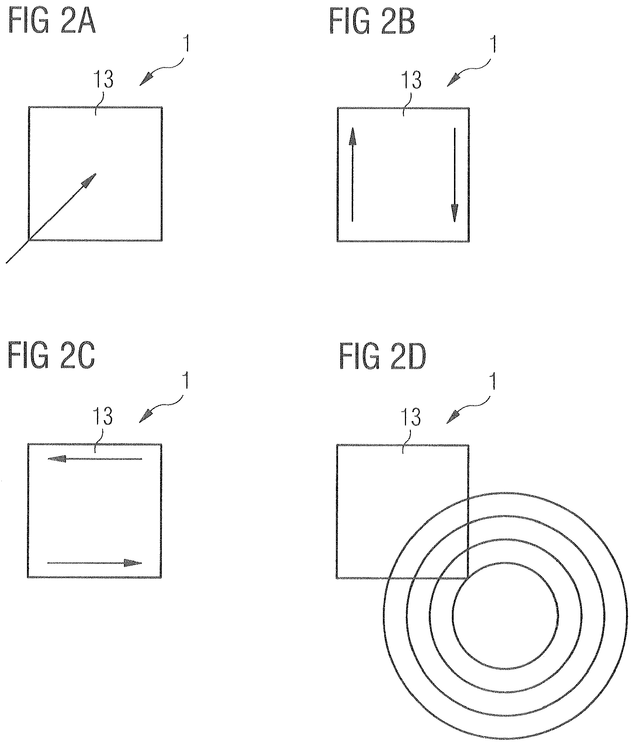

In Verbindung mit den schematischen Draufsichten der Figuren 2A bis 2D auf eine Bedienoberfläche 13 einer hier beschriebenen Bedienvorrichtung ist die Bedienung einer hier beschriebenen Bedienvorrichtung durch einen Benutzer kurz erläutert.

In Verbindung mit der Figur 2A ist die Wirkung des Näherungsschalters 11 schematisch dargestellt. Bei der Annäherung eines Objekts, beispielsweise einer Hand, wird das berührungssensitive Bedienelement 10 aktiviert. Beispielsweise kann die Bedienoberfläche 13 kurz pulsierend aufleuchten oder im Dauerbetrieb leuchten.

In Verbindung mit der Figur 2B ist dargestellt, dass durch streichende Bewegung, beispielsweise mit den Fingerkuppen nach oben und nach unten, die Helligkeit des von der mehrfarbigen Lichtquelle 2 erzeugten Lichts eingestellt werden kann. Der Benutzer kann aus einer vorgegebenen Anzahl von Helligkeiten wählen. Es kann der Benutzer zwischen wenigstens vier Helligkeiten wählen. Ferner kann der Benutzer höchstens eine Auswahl zwischen 100 Helligkeiten treffen.

In Verbindung mit der Figur 2C ist dargestellt, dass der Benutzer beispielsweise durch Bewegung der Fingerspitzen entlang der Bedienoberfläche 13 nach rechts oder links eine Farbe zum Betreiben der mehrfarbigen Lichtquelle aus der vorgegebenen Anzahl von Farben auswählen kann. Die Menge der vorgegebenen Farben (das so genannte "Color-Set") kann vom Hersteller oder beispielsweise mittels eines PCs über den Trägerfrequenzadapter 16 in der Speichereinheit 12a der Steuervorrichtung 12 der Bedienvorrichtung 1 vorgegeben werden.

In Verbindung mit der Figur 2D ist das Einschalten der Bedienvorrichtung 1 über ein akustisches Signal, beispielsweise über ein Klatschen, schematisch dargestellt. Beispielsweise über einen angeschlossenen PC kann der Akustikschalter 14 ein- und ausgeschaltet werden, so dass auch ein Betrieb ohne Empfindlichkeit der Bedienvorrichtung für akustische Signale möglich ist.

In Verbindung mit der Figur 3 ist eine hier beschriebene Beleuchtungsvorrichtung schematisch dargestellt. Die Beleuchtungsvorrichtung umfasst eine hier beschriebene Bedienvorrichtung 1. Vorliegend steuert die Bedienvorrichtung 1 zwei mehrfarbige Lichtquellen 2. Die Bedienvorrichtung 1 ist dazu über eine Stromleitung 3 mit den Trägerfrequenzadaptern 24 der Lichtquellen 2 verbunden. Die Stromleitung 3 sorgt neben der Signalleitung auch für eine Bestromung der Bedienvorrichtung 1 sowie der mehrfarbigen Lichtquellen 2 mit dem notwendigen Betriebsstrom.

Vorliegend werden von der Bedienvorrichtung 1 zwei unterschiedliche mehrfarbige Lichtquellen 2 gesteuert. Eine mehrfarbige Lichtquelle 2 umfasst Leuchtdioden 2, die jeweils vorzugsweise wenigstens zwei Leuchtdiodenchips 23 umfassen, die dazu eingerichtet sind, Licht voneinander unterschiedlicher Farbe zu emittieren. Beispielsweise handelt es sich bei den Leuchtdioden 22 jeweils um so genannte RGB-Leuchtdioden. Die Leuchtdioden können auf einem Anschlussträger 21 angeordnet sein, auf den oder in den auch der Trägerfrequenzadapter 24 integriert sein kann.

Bei der anderen mehrfarbigen Lichtquelle 2 handelt es sich um eine OLED 25, die beispielsweise ebenfalls zur Erzeugung von mehrfarbigem Licht geeignet ist.

Die hier beschriebene Bedienvorrichtung 1 sowie die hier beschriebene Beleuchtungsvorrichtung zeichnen sich insbesondere durch ihre Einfachheit aus. Nach einmaliger Konfiguration der Bedienvorrichtung - die gegebenenfalls schon beim Hersteller der Bedienvorrichtung erfolgen kann - ist die Bedienvorrichtung intuitiv zu bedienen. Durch in die Bedienvorrichtung integrierbare Merkmale wie eine "Panic Light"-Funktion über den Akustikschalter werden weitere Hilfsgeräte überflüssig. Aufgrund des Trägerfrequenzadapters der Bedienvorrichtung ist es möglich, alle Bedienvorrichtungen in einem Gehäuse zentral von einem Computer aus zu installieren und zu warten. Zusätzliche Kabel auch zum Betrieb der mehrfarbigen Lichtquellen müssen nicht im Gebäude verlegt werden.

## Patentansprüche

1. Bedienvorrichtung (1) zur Ansteuerung einer mehrfarbigen Lichtquelle (2) mit
- einem berührungssensitiven Bedienelement (10),
- einem Näherungsschalter (11), der dazu eingerichtet ist, das berührungssensitive Bedienelement (10) bei der Annäherung des Benutzers an das berührungssensitive Bedienelement (10) einzuschalten, und
- einer Steuervorrichtung (12), die dazu eingerichtet ist, eine mehrfarbige Lichtquelle (2) zu steuern,
wobei
- das berührungssensitives Bedienelement (10) dazu eingerichtet ist, mittels Berührung durch einen Benutzer bedient zu werden,
- das berührungssensitive Bedienelement (10) eine Bedienoberfläche (13) umfasst,
- die Steuervorrichtung (12) dazu eingerichtet ist, die mehrfarbige Lichtquelle (2) mit einer vorgegebenen Anzahl von wenigstens drei und/oder höchstens 500 Farben und mit einer vorgegebenen Anzahl von wenigstens vier und/oder höchstens 100 Helligkeiten zu steuern, und
- das berührungssensitive Bedienelement (10) dazu eingerichtet ist, in Abhängigkeit von der Berührung durch den Benutzer eine Farbe und eine Helligkeit aus der vorgegebenen Anzahl der Farben und Helligkeiten auszuwählen,
**dadurch gekennzeichnet, dass**
- die Bedienoberfläche (13) unstrukturiert ist und keine andersartigen Kennzeichnungen aufweist,
- in einer Speichereinheit (12a) der Steuervorrichtung (12) die vorgegebene Anzahl von Farben und Helligkeiten abgespeichert ist, und
- die Bedienvorrichtung (1) dazu eingerichtet ist, tagsüber ein anderes Farbspektrum dem Benutzer zur Auswahl zu bieten als nachts.

2. Bedienvorrichtung (1) nach dem vorherigen Anspruch,
bei der die die Bedienoberfläche (13) dazu eingerichtet ist, im Betrieb Licht abzustrahlen, das eine zur ausgewählten Farbe ähnliche oder identische Farbe aufweist.

3. Bedienvorrichtung (1) nach einem der vorherigen Ansprüche,
bei der die Bedienoberfläche (13) dazu eingerichtet ist, im Betrieb Licht abzustrahlen, dass eine zur ausgewählten Helligkeit ähnliche oder proportionale Helligkeit aufweist.

4. Bedienvorrichtung (1) nach einem der vorherigen Ansprüche,
mit einem Akustikschalter (14), der dazu eingerichtet ist, das berührungssensitive Bedienelement (10) bei Empfang eines akustischen Signals vorgegebener Lautstärke einzuschalten.

5. Bedienvorrichtung (1) nach einem der vorherigen Ansprüche,
mit zumindest einer Leuchtdiode, die dazu eingerichtet ist, zumindest einen Teil des von der Bedienoberfläche (13) im Betrieb abgestrahlten Lichts zu erzeugen.

6. Bedienvorrichtung (1) nach einem der vorherigen Ansprüche, bei der das berührungssensitive Bedienelement (10) eine berührungssensitive OLED (25) umfasst, wobei eine Abstrahlfläche der berührungssensitiven OLED (25) die Bedienoberfläche (13) bildet.

7. Bedienvorrichtung (1) nach einem der vorherigen Ansprüche,
mit einem Trägerfrequenzadapter (16), der dazu eingerichtet ist, die Bedienvorrichtung (1) mit einem Betriebsstrom zu versorgen und der zum Austausch von Steuersignalen zwischen der Bedienvorrichtung (1) und der mehrfarbigen Lichtquelle (2) eingerichtet ist.

8. Beleuchtungsvorrichtung mit
- zumindest einer mehrfarbigen Lichtquelle (2), die dazu eingerichtet ist, Licht mit veränderbaren Farben und Helligkeiten abzustrahlen, und
- einer Bedienvorrichtung (1) nach einem der vorherigen Ansprüche, wobei
- die Bedienvorrichtung (1) zur Ansteuerung der zumindest einen mehrfarbigen Lichtquelle (2) mit der zumindest einen mehrfarbigen Lichtquelle (2) elektrisch leitend verbunden ist.

9. Beleuchtungsvorrichtung nach dem vorherigen Anspruch, bei der die zumindest eine mehrfarbige Lichtquelle (2) zumindest zwei Leuchtdiodenchips (23) umfasst.

10. Beleuchtungsvorrichtung nach einem der beiden vorherigen Ansprüche,
bei der die zumindest eine mehrfarbige Lichtquelle (2) zumindest eine OLED (25) umfasst.

11. Beleuchtungsvorrichtung nach einem der Ansprüche 8 bis 10,
bei der die Bedienvorrichtung (1) und die zumindest eine mehrfarbige Lichtquelle (2) jeweils einen Trägerfrequenzadapter (16, 24) umfassen, der dazu
eingerichtet ist, die Bedienvorrichtung (1) und die zumindest eine mehrfarbige Lichtquelle (2) mit einem Betriebsstrom zu versorgen.

12. Beleuchtungsvorrichtung nach dem vorherigen Anspruch,
bei der die Bedienvorrichtung (1) dazu eingerichtet ist, die zumindest eine mehrfarbige Lichtquelle (2) mittels auf eine Stromleitung (3) aufgeprägte Steuersignale zu steuern.

## Claims

1. An operating device (1) for controlling a multi-colour light source (2) comprising
- a touch-sensitive control element (10),
- a proximity switch (11) which is designed to turn on the touch-sensitive control element (10) when a user approaches the touch-sensitive control element (10), and
- a control device (12) which is configured to control a multi-color light source (2),
wherein
- the touch-sensitive control element (10) is configured to be operated by means of touch by the user,
- the touch-sensitive control element (10) comprises a user interface (13),
- the control device (12) is configured to control the multi-colored light source (2) with a predetermined number of at least three and/or at most 500 colors and with a predetermined number of at least four and/or at most 100 brightnesses, and
- depending on the touch by the user, the touch-sensitive control element (10) is configured to select a color and a brightness from the predetermined number of colors and brightnesses,
**characterized in that**
- the user interface (13) is unstructured and has no other types of identifiers,
- the predetermined number of colors and brightnesses is stored in a memory unit (12a) of the control device (12), and
- the operating device (1) configured to offer a different color spectrum to the user for selection during the day than during the night.

2. The operating device (1) according to the preceding claim, in which the user interface (13) is configured to emit light during operation, said light having a color similar to or identical to the selected color.

3. The operating device (1) according to one of the preceding claims,
in which the user interface (13) is configured to emit light during operation, said light having a brightness similar or proportional to the selected brightness.

4. The operating device (1) according to one of the preceding claims,
comprising an acoustic switch (14) which is configured to switch the touch-sensitive control element (10) on receipt of an acoustic signal of predetermined volume.

5. The operating device (1) according to one of the preceding claims,
comprising at least one light-emitting diode which is configured to generate at least part of the light emitted by the user interface (13) during operation.

6. The operating device (1) according to one of the preceding claims,
wherein the touch-sensitive control element (10) comprises a touch-sensitive OLED (25), wherein a radiating surface of the touch-sensitive OLED (25) forms the user interface (13).

7. The operating device (1) according to one of the preceding claims,
comprising a carrier frequency adapter (16) which is configured to supply the operating device (1) with an operating current and which is configured to exchange control signals between the operating device (1) and the multi-color light source (2) .

8. A lighting device comprising
- at least one multi-color light source (2) which is configured to emit light with variable colors and brightnesses, and
- an operating device (1) according to one of the preceding claims, wherein
- the operating device (1) for controlling the at least one multi-colored light source (2) is electrically conductively connected to the at least one multi-colored light source (2).

9. The lighting device according to the preceding claim,
in which the at least one multi-colored light source (2) comprises at least two light-emitting diode chips (23).

10. The lighting device according to one of the two preceding claims,
in which the at least one multi-colored light source (2) comprises at least one OLED (25).

11. The lighting device according to one of claims 8 to 10, in which the operating device (1) and the at least one multi-colored light source (2) each have a carrier frequency adapter (16, 24) which is configured to supply the operating device (1) and the at least one multi-colored light source (2) with an operating current.

12. The lighting device according to the preceding claim,
in which the operating device (1) is configured to control the at least one multi-colored light source (2) by means of control signals applied to a current line (3).

## Revendications

1. Dispositif de commande (1) pour commander une source lumineuse multicolore (2) comprenant
- un élément de commande (10) tactile,
- un commutateur de proximité (11) agencé pour commuter l'élément de commande tactile (10) lorsque l'utilisateur s'approche de l'élément de commande tactile (10), et
- un dispositif de commande (12) apte à commander une source lumineuse multicolore (2),
dans lequel
- l'élément de commande tactile (10) est adapté pour être commandé par un utilisateur qui le touche,
- l'élément de commande tactile (10) comporte une surface utilisateur (13),
- le dispositif de commande (12) est agencé pour commander la source lumineuse multicolore (2) présentant un nombre prédéfini d'au moins trois et/ou au maximum 500 couleurs et un nombre prédéfini d'au moins quatre et/ou au maximum 100 niveaux de luminosité, et
- l'élément de commande tactile (10) est configuré pour sélectionner une couleur et un niveau de luminosité dans le nombre prédéfini des couleurs et niveaux de luminosité selon les commandes tactiles effectuées par l'utilisateur,
**caractérisé en ce que**
- la surface utilisateur (13) n'est pas structurée, ne présentant aucun marquage différent,
- le nombre prédéfini de couleurs et de niveaux de luminosité est stocké dans une mémoire (12a) du dispositif de commande (12), et
- le dispositif de commande (1) est prévu pour offrir à l'utilisateur une gamme de couleurs différente durant la journée que durant la nuit.

2. Dispositif de commande (1) selon la revendication précédente, dans lequel la surface utilisateur (13) est configurée pour émettre en service de la lumière ayant une couleur similaire ou identique à la couleur sélectionnée.

3. Dispositif de commande (1) selon l'une des revendications précédentes, dans lequel la surface utilisateur (13) est configurée pour émettre en service de la lumière ayant un niveau de luminosité similaire ou proportionnel au niveau de luminosité sélectionné.

4. Dispositif de commande (1) selon l'une des revendications précédentes, comportant un commutateur acoustique (14) apte à commuter l'élément de commande tactile (10) lors de la réception d'un signal acoustique d'un niveau sonore prédéterminé.

5. Dispositif de commande (1) selon l'une des revendications précédentes, comportant au moins une diode électroluminescente prévue pour générer en service au moins une partie de la lumière émise par la surface utilisateur (13).

6. Dispositif de commande (1) selon l'une des revendications précédentes, dans lequel l'élément de commande (10) tactile comporte une OLED tactile (25), une surface de rayonnement de l'OLED tactile (25) constituant la surface utilisateur (13).

7. Dispositif de commande (1) selon l'une des revendications précédentes, comportant un adaptateur de fréquence porteuse (16) apte à alimenter le dispositif de commande (1) en un courant de service et agencé pour un échange de signaux de commande entre le dispositif de commande (1) et la source lumineuse multicolore (2) .

8. Dispositif d'éclairage comportant
- au moins une source lumineuse multicolore (2) apte à émettre de la lumière ayant des couleurs et des niveaux de luminosité variables, et
- un dispositif de commande (1) selon l'une des revendications précédentes,
- le dispositif de commande (1) étant relié de façon électriquement conductrice avec l'au moins une source lumineuse multicolore (2) pour sélectionner l'au moins une source lumineuse multicolore (2).

9. Dispositif d'éclairage selon la revendication précédente, dans lequel l'au moins une source lumineuse multicolore (2) comporte au moins deux puces pour diode électroluminescente (23) .

10. Dispositif d'éclairage selon l'une quelconque des deux revendications précédentes, dans lequel l'au moins une source lumineuse multicolore (2) comporte au moins une OLED (25).

11. Dispositif d'éclairage selon l'une des revendications 8 à 10, dans lequel le dispositif de commande (1) et l'au moins une source lumineuse multicolore (2) comprennent chacun un adaptateur de fréquence porteuse (16, 24) agencé pour alimenter le dispositif de commande (1) et l'au moins une source lumineuse multicolore (2) en un courant de service.

12. Dispositif d'éclairage selon la revendication précédente, dans lequel le dispositif de commande (1) est conçu pour commander l'au moins une source lumineuse multicolore (2) moyennant des signaux de commande imprimés sur une ligne de courant (3).
